# EUROPÄISCHE PATENTSCHRIFT

(11) **EP 4 320 492 B1**
(45) Veröffentlichungstag und Bekanntmachung des Hinweises auf die Patenterteilung: **19.03.2025**
(21) Anmeldenummer: 22732434.0
(22) Anmeldetag: 24.05.2022
(51) Int. Cl.: G05B 19/4097, G06F 21/10, G06F 21/62

(54) **ERZEUGUNG UND ABARBEITUNG VON VERSCHLÜSSELTEN PROGRAMMANWEISUNGEN MITTELS EINER NUMERISCHEN STEUEREINRICHTUNG**
GENERATION AND PROCESSING OF ENCRYPTED PROGRAM INSTRUCTIONS USING A NUMERICAL CONTROL DEVICE
GÉNÉRATION ET TRAITEMENT DES INSTRUCTIONS DE PROGRAMME CHIFFRÉES À L'AIDE D'UN DISPOSITIF À COMMANDE NUMÉRIQUE

(30) Priorität: 14.06.2021 EP 21179270
(43) Veröffentlichungstag der Anmeldung: 14.02.2024
(73) Patentinhaber: Siemens Aktiengesellschaft, 80333 München (DE)
(72) Erfinder: BAUER, Matthias, 91413 Neustadt an der Aisch (DE); HOPF, Ronny, 08248 Klingenthal (DE); IMMENROTH, Lars, 08060 Zwickau (DE); SEEGER, Guido, 91083 Baiersdorf (DE)
(74) Vertreter: Siemens Patent Attorneys
(86) Internationale Anmeldenummer: PCT/EP2022/063948
(87) Internationale Veröffentlichungsnummer: WO 2022/263116

(56) Entgegenhaltungen:
- EP-A1- 3 534 228
- DE-A1- 102018 214 840
- US-A1- 2018 094 953

## Beschreibung

Die Erfindung betrifft ein Verfahren zum Betrieb einer numerischen Steuereinrichtung zum Steuern einer Fertigungsmaschine zur Fertigung eines Werkstücks, wobei Werkstückdaten auf der numerischen Steuereinrichtung bereitgestellt werden, wobei eine CAM-Software auf der numerischen Steuereinrichtung bereitgestellt wird, wobei mittels der CAM-Software in Abhängigkeit der Werkstückdaten Programmanweisungen zur Fertigung des Werkstücks mittels der Fertigungsmaschine erzeugt werden und wobei die Programmanweisungen durch die numerische Steuereinrichtung abgearbeitet werden zur Steuerung der Fertigungsmaschine zur Fertigung des Werkstücks.

Ferner betrifft die Erfindung eine numerischen Steuereinrichtung zur Durchführung des Verfahrens.

Weiterhin betrifft die Erfindung ein Fertigungsmaschinensystem, umfassend eine numerische Steuereinrichtung zur Durchführung des Verfahrens sowie eine mit der numerischen Steuereinrichtung verbundene Fertigungsmaschine.

In der Regel beginnt der Herstellungsprozess eines zu fertigenden Werkstücks mit der Modellierung des Werkstücks auf einem CAD-System (Computer Aided Design). Die mit Hilfe des CAD-Systems solchermaßen bestimmten Geometriedaten des zu fertigenden Werkstücks werden als Eingangsgröße an ein CAM-System (Computer Aided Manufacturing) weitergeleitet. Mit Hilfe des CAM-Systems werden aus den Geometriedaten des zu fertigenden Werkstücks und der späteren Konfiguration der Fertigungsmaschine, sowie ggf. den Geometriedaten eines Rohteils, das das Ausgangsteil für den Fertigungsvorgang später an der Fertigungsmaschine bildet, die Bahnen für ein Werkzeug ermittelt, entlang derer sich das Werkzeug relativ zu dem Werkstück während des Herstellungsprozesses bewegt. Beispielsweise werden für einer Fräsbearbeitung die Fräsbahnen ermittelt, die zur Herstellung des aus dem Rohteil zu fertigenden Werkstücks von einer Fräsmaschine abzufahren sind.

Solchermaßen werden die Bewegungen eines oder mehrerer Werkzeuge, die zur Herstellung des Werkstücks notwendig sind, von dem CAM-System bestimmt und als Eingangsgröße einem sogenannten Post-Prozessor zur Verfügung gestellt.

Dabei sind im Zusammenhang mit der Erfindung mögliche Fertigungsverfahren nicht auf materialabhebende Verfahren (Fräsen, Drehen, Bohren, Schleifen etc), beschränkt, sondern es sind ebenso materialauftragende Fertigungsverfahren (3D-Druck, Schweißen etc.) umfasst.

So vielfältig wie die Fertigungsverfahren sind dementsprechend auch die dafür verwendeten Fertigungsmaschinen. So kommen für die Fertigung Produktionsmaschinen, Werkzeugmaschinen, 3D-Druck-Maschinen, Roboter usw. in Betracht.

Der Post-Prozessor, der gewöhnlich in Form eines Programms, das auf einem Rechner abläuft, vorliegt, erzeugt aus den von dem CAM-System ermittelten Bewegungsbahnen und der Konfiguration der konkreten Fertigungsmaschine, mit der die Fertigung erfolgen soll, das Steuerprogramm für diese konkrete Fertigungsmaschine.

Bei einer Fertigungsmaschine in Form einer Werkzeugmaschine werden üblicherweise die numerische Steuereinrichtung als CNC-Steuerung (Computerized Numerical Control) oder numerische Steuerung und das Steuerprogramm auch als Teileprogramm, NC-Teileprogramm oder NC-Programm bezeichnet.

Mittels der CNC-Steuerung wird in Verbindung mit dem entsprechenden Teileprogramm auf der betreffenden Werkzeugmaschine aus dem Rohteil schließlich das gewünschte Werkstück gefertigt. Hierfür setzt die CNC-Steuerung die in dem Teileprogramm hinterlegten Bewegungsbahnen in interpolierte Bewegungen der einzelnen Maschinenachsen um, sodass das Werkzeug in der gewünschten Weise relativ zu dem Werkstück bewegt wird.

Das Steuerprogramm bzw. Teileprogramm liegt dabei üblicherweise in Form einer Datei vor, die in ASCII-Code zeilenweise hintereinander in DIN-Code geschriebene Programmanweisungen (Befehle), insbesondere den sogenannten G-Code enthält. Ein solcher Befehl (z.B. G3 X115 Y113.3 I-43 J25.52), auch Satz genannt, kann z.B. darin bestehen, ein Werkzeug, z.B. einen Fräser, entlang eines Kreisbahnabschnitts zu einer Ziellage zu bewegen, um aus dem Rohteil z.B. eine Aussparung auszufräsen. Die einzelnen Befehle des Teileprogramms werden später von der numerischen Steuereinrichtung der Werkzeugmaschine eingelesen. Die numerische Steuereinrichtung berechnet entsprechend den Befehlen des Teileprogramms Lagesollwerte X_{soll n} für jeden Antrieb n des Antriebssystems der Werkzeugmaschine und weist sie den Antrieben entsprechend an. Eine ebenfalls von der numerischen Steuereinrichtung umfasste Reglereinrichtung sorgt dafür, dass sich die ermittelten Lagesollwerte X_{soll_n} der einzelnen Antriebe (Achsen) auch entsprechend einstellen.

Die oben beschriebene Vorgehensweise und die dafür notwendigen Komponenten sind beispielsweise aus der EP 2058717 A1 bekannt.

Es gibt einen Trend, komplexe Fertigungsaufgaben, die bisher nur mit eigenständigen (externen) CAD/CAM-Werkzeugen gelöst wurden, in die CNC-Steuerung für eine Werkzeugmaschine zu verlagern. Diese CAD/CAM-Software generiert dann das Teileprogramm zur Steuerung der betreffenden Werkzeugmaschine direkt auf der mit der Werkzeugmaschine verbundenen Steuerung, auf der es anschließend auch abgebarbeitet wird.

So ist aus der WO 2016086344 A1 bekannt, dass die CAD-Daten direkt in die CNC-Steuerung eingegeben werden können und eine auf der CNC-Steuerung bereitgestellte CAM-Software daraus ein Teileprogramm direkt auf dieser CNC-Steuerung generiert.

Aus der EP 2620826 A1 ist ferner bekannt, dass ein Teileprogramm zum Schutz vor unberechtigtem Zugriff in verschlüsselter Form zwischen einem externen CAM-System und einer CNC-Steuerung übertragen werden kann.

Dokument DE 102018214840 A1 betrifft ein Verfahren und ein System zum Bereitstellen von Bearbeitungsdaten an einer numerischen Steuerungseinrichtung einer numerisch gesteuerten Werkzeugmaschine, umfassend: Bereitstellen von Bearbeitungsdaten an einer externen Datenverarbeitungseinrichtung, wobei die Bearbeitungsdaten numerische Steuerungsdaten, insbesondere ein oder mehrere NC-Programme, umfassen, auf deren Grundlage eine Bearbeitung eines Werkstücks an der numerisch gesteuerten Werkzeugmaschine ausführbar ist. Die NC-Programme werden mittels der externen Datenverarbeitungseinrichtung erzeugt und ggf. in verschlüsselter Form auf die numerische Steuerungseinrichtung übertragen.

Dokument EP 3534228 A1 beschreibt eine Technologie zum Verhindern von Datenlecks in einer Steuervorrichtung, die ein Steuersubjekt steuert. Dabei werden mittels eines privaten Schlüssels und eines öffentlichen Schlüssels unter Verwendung der Steuervorrichtung verschlüsselte Daten außerhalb der Steuervorrichtung unter Verwendung des öffentlichen Schlüssels erzeugt und ggf. unter Verwendung des privaten Schlüssels für die verschlüsselten Daten mittels der Steuervorrichtung entschlüsselt und in einem flüchtigen Speicherbereich, auf den von außen nicht zugegriffen werden kann, gespeichert.

Dokument US 2018094953 A1 offenbart eine verteilte Fertigungsplattform, die Designer, Hersteller, Spediteure und andere Einheiten verbindet und den Prozess der Herstellung und Lieferung neuer und bestehender Produkte vereinfacht. Ein Distributed Ledger oder eine Blockchain kann verwendet werden, um Transaktionen aufzuzeichnen, Smart Contracts auszuführen und andere Operationen durchzuführen, um die Transparenz und Integrität der Lieferkette zu erhöhen. Blockchainfähige Verpackungen können verwendet werden, um die Bewegung und den Zustand von Paketen von der Herstellung über den Transport bis zur Lieferung zu verfolgen.

Eine Aufgabe der vorliegenden Erfindung ist es, ein Steuerprogramm für eine numerische Steuereinrichtung, insbesondere ein Teileprogramm für eine CNC-Steuerung, vor unberechtigtem Zugriff zu schützen.

Die Lösung dieser Aufgabe gelingt durch ein Verfahren gemäß Anspruch 1, d.h. ein Verfahren zum Betrieb einer numerischen Steuereinrichtung zum Steuern einer Fertigungsmaschine zur Fertigung eines Werkstücks mit folgenden Schritten:
- Bereitstellen von Werkstückdaten auf der numerischen Steuereinrichtung,
- Bereitstellen einer CAM-Software auf der numerischen Steuereinrichtung,
- Erzeugen von Programmanweisungen zur Fertigung des Werkstücks mittels der Fertigungsmaschine, wobei die Programmanweisungen mittels der CAM-Software in Abhängigkeit der Werkstückdaten auf der numerischen Steuereinrichtung erzeugt werden,
- Verschlüsseln der Programmanweisungen und speichern der verschlüsselten Programmanweisungen in einem nichtflüchtigen Speicher der numerischen Steuereinrichtung,
- Auslesen der verschlüsselten Programmanweisungen aus dem nichtflüchtigen Speicher, entschlüsseln der verschlüsselten Programmanweisungen und abarbeiten der entschlüsselten Programmanweisungen durch die numerische Steuereinrichtung zur Steuerung der Fertigungsmaschine zur Fertigung des Werkstücks.

Durch die Verlagerung eines CAM-Algorithmus in die numerische Steuereinrichtung, nachfolgend auch nur kurz "Steuereinrichtung" genannt, kann der Anwender direkt an der Bedieneinheit der Steuereinrichtung auf sich ändernde Bedingungen eingehen. Darüber hinaus hat der CAM-Algorithmus Zugriff auf Maschinenparameter der betreffenden Fertigungsmaschine, die in der Steuereinrichtung hinterlegt sind, und kann so mitunter ein optimiertes Steuerprogramm und damit ein besseres Fertigungsergebnis erzeugen. Da das Steuerprogramm für die konkret vorliegende Fertigungsmaschine erstellt wird, ist auch kein Post-Prozessor erforderlich.

Der CAM-Algorithmus erzeugt direkt auf der Steuereinrichtung das Steuerprogramm, welches aktuell für die Fertigung eines bestimmten Werkstücks benötigt wird. Insbesondere umfasst das Steuerprogramm alle für die Fertigung des Werkstücks erforderlichen Programmanweisungen. Dieses Steuerprogramm bleibt dann für weitere identische Fertigungen in dem Dateisystem der Steuereinrichtung erhalten. Sollten sich relevante Parameter ändern, wird das bisherige Steuerprogramm komplett oder teilweise durch ein geändertes Steuerprogramm überschrieben.

Das von dem CAM-Algorithmus auf der Steuereinrichtung generierte Steuerprogramm beinhaltet technologisches Wissen, welches geschützt werden muss. Insbesondere ist eine Vervielfältigung des Steuerprogramms und damit der Einsatz desselben auf anderen Steuereinrichtungen bzw. Fertigungsmaschinen zu verhindern.

Der CAM-Algorithmus generiert auf der numerischen Steuereinrichtung ein verschlüsseltes Steuerprogramm, ohne dabei einzelne Programmanweisungen unverschlüsselt in einem nicht-flüchtigen Speicher abzulegen. Der CAM-Algorithmus erzeugt also insbesondere das für die Fertigung eines bestimmten Werkstücks nötige Teileprogramm direkt zu dem im Herstellungsprozess notwendigen Zeitpunkt, und zwar in verschlüsselter Form.

Das erfindungsgemäße Verfahren bietet den Vorteil, dass auch direkt auf der numerischen Steuereinrichtung erzeugte Steuerprogramme vor unberechtigtem Zugriff geschützt sind. Insbesondere liegt das Steuerprogramm lediglich in verschlüsselter Form in einem nichtflüchtigen Speicher der numerischen Steuereinrichtung vor, so dass es z.B. von einer Person, die keine Kenntnis von einem zur Entschlüsselung benötigten Schlüssel hat, eventuell zwar aus dem nichtflüchtigen Speicher ausgelesen, aber nicht entschlüsselt werden kann.

Zur Verschlüsselung nutzt der CAM-Algorithmus insbesondere kryptografische Algorithmen. Nach der Verschlüsselung können die Programmanweisungen in dem Steuerprogramm ohne Kenntnis des Schlüssels nicht mehr gelesen werden. Auch sind Manipulationen der sich hinter den Programmanweisungen verbergenden Bewegungsinformationen nicht mehr möglich.

Da die Verschlüsselung direkt auf der numerische Steuereinrichtung erfolgt, ist insbesondere auch keine externe Einrichtung für das Verschlüsseln des Teileprogramms notwendig.

Auch sind Einrichtungen zum Transport des Schlüssels von der externen Einrichtung auf die numerische Steuereinrichtung nicht notwendig, wie dies bei einem durch ein externes CAD-CAM-System erzeugten und verschlüsselten Steuerprogramm der Fall wäre.

Bisherige Sicherheits-Lösungen sehen ein Passwort oder eine Authentifizierung für den Zugriff auf die numerische Steuereinrichtung vor. Jedoch können alle Personen mit einem dadurch erlangten Zugriff auf die numerische Steuereinrichtung auch auf deren Filesystem zugreifen und damit Zugriff auf schützenswerte Daten, z.B. Teileprogramme erhalten. Die Erfindung kann hier einen zusätzlichen Schutz bieten.

Vorteilhaft werden die verschlüsselten Programmanweisungen in einem NC-Kern der numerischen Steuereinrichtung entschlüsselt. Der NC-Kern, auch NCK (Numerical Control Kernel) genannt, ist der Teil der numerischen Steuereinrichtung, der die Achsen der Werkzeugmaschine steuert. Wesentliche Komponenten des NCK sind: der Interpreter, der Interpolator sowie die Regler für Position, Geschwindigkeit und Beschleunigung der einzelnen Antriebe (Achsen) der Werkzeugmaschine. Der NCK ist bezüglich vertraulicher Daten ein sehr sensibler und daher vor äußeren Zugriffen besonders geschützter Bereich der numerischen Steuereinrichtung.

Ferner werden die entschlüsselten Programmanweisungen lediglich in einem flüchtigen Speicher des NCK gespeichert, wodurch diese unmittelbar nach deren Abarbeitung durch neue Programmanweisungen überschrieben und somit wieder gelöscht werden. Es wäre daher allenfalls mit sehr großem Aufwand möglich, die unverschlüsselten Programmanweisungen aus dem NCK der numerischen Steuereinrichtung auszulesen.

Darüber hinaus ist der NCK weiter in der Lage, die Bewegungsinformationen zu interpretieren und Achsbewegungen ohne funktionale Einschränkungen durchzuführen. Auch nicht verschlüsselte Steuerprogramme können jedoch weiterhin abgearbeitet werden.

Vorteilhaft kann der NC-Kern neben der Abarbeitung unverschlüsselter Steuerprogramme auch das verschlüsselte Dateiformat lesen und zur Abarbeitung wieder entschlüsseln. Dabei werden die entschlüsselten Programmanweisungen bzw. die sich daraus ergebenden einzelnen Bewegungsinformationen nicht im Filesystem der Steuereinrichtung abgelegt und auch nicht auf andere Weise außerhalb des NC-Kerns sichtbar, sondern nur intern im flüchtigen Speicher des NC-Kerns verfügbar gemacht. Der NC-Kern ist weiter in der Lage die Bewegungsinformationen zu interpretieren und Achsbewegungen ohne funktionale Einschränkungen durchzuführen, so wie dies auch bei unverschlüsselten Steuerprogrammen der Fall ist.

Die bisher von den integrierten CAM-Algorithmen erzeugten und unverschlüsselt im Filesystem abgelegten Steuerprogramme können fortan verschlüsselt abgelegt werden. Der NC-Kern "versteht" dieses verschlüsselte Dateiformat und kann es direkt abarbeiten. Damit kann der Fertigungsprozess direkt an der Fertigungsmaschine geschützt werden, insbesondere vor Datendiebstahl, Spionage, Veränderung der Produktionsinformation durch Änderung des Steuerprogrammes, Sabotage oder ungewollten Änderungen durch fehlerhafte Eingaben eines Bedieners.

Ein Bediener, der berechtigten Zugriff auf die Steuereinrichtung hat, kann somit ein in der beschriebenen Weise erzeugtes und geschütztes Steuerprogramm ausführen, es aber nicht einsehen, verändern oder kopieren.

Eine Ausführungsform der Erfindung sieht vor, dass die Programmanweisungen einzelne Sätze oder Blöcke aus mehreren Sätzen eines Steuerprogramms zur Fertigung des Werkstücks bilden.

Sowohl bei der Verschlüsselung als auch bei der Entschlüsselung kann es vorteilhaft sein, nicht das komplette Steuerprogramm zur Fertigung des Werkstücks in einem Arbeitsgang zu verschlüsseln bzw. zu entschlüsseln. So wird das Steuerprogramm durch die CAM-Software satzweise bzw. blockweise generiert, sodass es sinnvoll ist, diese Sätze oder Blöcke bereits während ihrer Erzeugung oder zumindest unmittelbar im Anschluss daran zu verschlüsseln, damit sich zu keinem Zeitpunkt entweder das gesamte Steuerprogramm oder größere Teile davon unverschlüsselt auf der numerischen Steuereinrichtung befinden.

Ähnlich verhält es sich auch bei der Entschlüsselung des Steuerprogramms. Auch hier ist es von Vorteil, wenn die Entschlüsselung satz- bzw. blockweise erfolgt, sodass stets nur die Programmanweisungen des Steuerprogramms entschlüsselt werden, die gerade durch die numerische Steuereinrichtung abgearbeitet werden oder deren Abarbeitung unmittelbar bevorsteht.

Bei der genannten Vorgehensweise ist es nicht zwingend erforderlich, dass bei einer blockweisen Ver- und Entschlüsselung die Blöcke bei der Verschlüsselung den Blöcken bei der Entschlüsselung entsprechen. So können zum Beispiel für die Verschlüsselung und für die Entschlüsselung unterschiedliche Größen für die betreffenden Blöcke gewählt werden. Die Größe der Blöcke (auch Blocklänge genannt) lässt sich so gegebenenfalls an unterschiedliche Randbedingungen bei der Verschlüsselung bzw. bei der Entschlüsselung anpassen. Insbesondere lässt sich die Blocklänge bei der Entschlüsselung auch an Randbedingungen der numerischen Steuereinrichtung zur Abarbeitung dieser Blöcke anpassen.

Bei einer Ausführungsform der Erfindung erfolgt die Entschlüsselung der Programmanweisungen in Abhängigkeit von mit den Programmanweisungen verknüpften Metadaten. In der Regel werden diese Metadaten nicht für einzelne Programmanweisungen gelten - was jedoch prinzipiell auch möglich wäre - sondern für das komplette Steuerprogramm. Vorzugsweise wird durch die Metadaten festgelegt, dass die Entschlüsselung der Programmanweisungen auf eine bestimmte numerische Steuereinrichtung und/oder eine bestimmte Fertigungs- bzw. Werkzeugmaschine und/oder eine bestimmte Lizenz beschränkt ist. Dadurch kann ein unberechtigtes Ausführen eines Steuerprogramms zusätzlich erschwert werden, indem selbst bei Kenntnis des Schlüssels zur Entschlüsselung des Steuerprogramms noch weitere Bedingungen erfüllt sein müssen, damit die Daten sichtbar werden bzw. das betreffende Steuerprogramm ausgeführt werden kann. Auch das Übertragen und Ausführen des verschlüsselten Steuerprogramms auf einer anderen Maschine kann damit verhindert werden.

Bei einer Ausführungsform der Erfindung wird lediglich ein Schlüssel zum Ver- und Entschlüsseln der Programmanweisungen verwendet (symmetrische Verschlüsselung). Dies hat den Vorteil, dass nur ein Schlüssel benötigt wird, dieser jedoch sowohl von der Verschlüsselungs-Instanz als auch von der Entschlüsselungs-Instanz verwendet wird.

Alternativ ist es aber auch möglich, dass eine asymmetrische Verschlüsselung mit einem Schlüsselpaar, in der Regel einem sog. Public Key und einem sog. Private Key, vorgesehen wird.

Die verschlüsselnde Instanz kennt dabei den Schlüssel zum Entschlüsseln nicht.

Bei einer bevorzugten Ausführungsform der Erfindung erfolgt die Ver- und Entschlüsselung unter Verwendung einer OpenSSL-Software, wohinter sich allgemein eine Vielzahl kryptographischer Funktionen zum Ver- und Entschlüsseln sowie verschiedene weitere Werkzeuge im Zusammenhang mit der Ver- und Entschlüsselung verbergen. OpenSSL hat derzeit einen großen Verbreitungs- und Bekanntheitsgrad.

Bei der praktischen Umsetzung der Erfindung erweist es sich als vorteilhaft, wenn im Softwarebereich des NCK eine DRM-Bibliothek (Digital Rights Management) installiert ist, über die insbesondere die Schlüssel- und Rechte-Verwaltung organisiert wird. Dadurch ist es einfacher, die Zugriffsrechte zu verwalten und insbesondere können damit in einfacher Weise auch gleiche oder ähnliche Zugriffsrechte auf mehreren numerischen Steuereinrichtungen, z.B. innerhalb einer Fabrik, implementiert werden.

Weiterhin kann mittels der DRM-Bibliothek auch eine zunächst erforderliche Authentifizierung eines Benutzers vorgesehen werden, bevor ein Zugriff auf die numerische Steuereinrichtung allgemein oder darin befindliche, geschützte Inhalte möglich ist.

Weiterhin ist es möglich, dass sich der NCK zunächst authentifizieren muss, bevor er beispielsweise auf ein verschlüsseltes Steuerprogramm zugreifen kann.

Die oben genannte Aufgabe wird ferner gelöst durch eine numerische Steuereinrichtung, welche ein ebenfalls oben genanntes Verfahren ausführt.

Weiterhin wird die oben genannte Aufgabe gelöst durch ein Fertigungsmaschinensystem, umfassend eine derartige numerische Steuereinrichtung und eine davon gesteuerte Fertigungsmaschine.

Die Erfindung wird nachfolgend anhand von Ausführungsbeispielen exemplarisch näher beschrieben und erläutert. Dabei zeigen:
- FIG 1: ein erfindungsgemäßes Werkzeugmaschinensystem,
- FIG 2: eine erste Ausführungsform einer erfindungsgemäßen CNC-Steuerung,
- FIG 3: eine zweite Ausführungsform einer erfindungsgemäßen CNC-Steuerung,
- FIG 4: Verfahrensschritte bei der Durchführung eines erfindungsgemäßen Verfahrens.

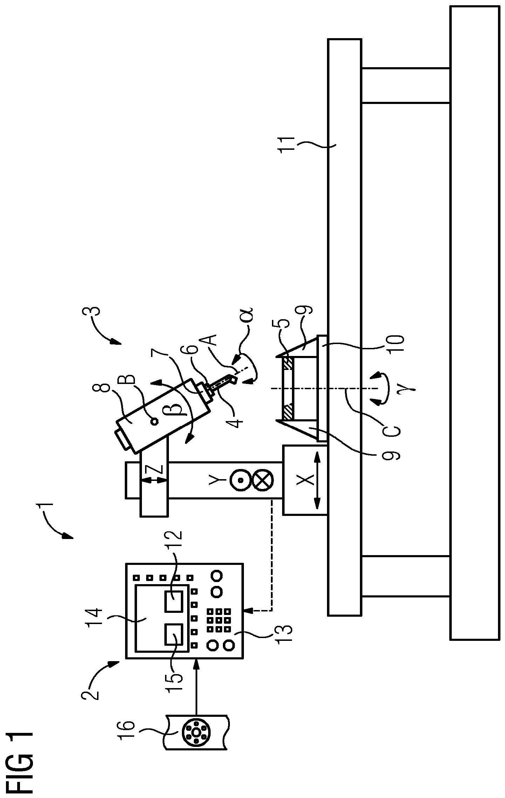

In FIG 1 ist schematisiert ein Fertigungsmaschinensystem in Form eines Werkzeugmaschinensystems 1 dargestellt, das eine numerische Steuereinrichtung in Form einer CNC-Steuerung 2 und eine damit verbundene Fertigungsmaschine in Form einer Werkzeugmaschine 3 umfasst. Die Werkzeugmaschine 3 verfügt im Rahmen des Ausführungsbeispiels über sechs Maschinenachsen, durch die eine Relativbewegung zwischen einem Werkzeug, das im Rahmen des Ausführungsbeispiels in Form eines Drehmeißels 4 vorliegt, und einem Werkstück 5 durchgeführt werden kann. Das Werkzeug 4 ist dabei in einen Werkzeughalter 6 eingespannt, der wiederum mit einer Werkzeugspindel 7 verbunden ist, die von einem lagegeregelten Motor 8 angetrieben wird. Das Werkstück 5 ist durch Spannmittel 9 an einem Werkstücktisch 10 befestigt.

Der Drehmeißel 4 lässt sich mit der im Ausführungsbeispiel gezeigten Werkzeugmaschine 3 mit der Übersichtlichkeit halber in FIG 1 nicht dargestellten Antrieben in X-**,** Y- und Z-Richtung lagegeregelt translatorisch bewegen. Neben den drei Linearachsen umfasst die gezeigte Werkzeugmaschine 3 ferner die beiden ebenfalls aus FIG 1 ersichtlichen lagegeregelten Rundachsen A (Spindelachse) und B, mit denen das Werkzeug 4 um die jeweilige Achse gedreht und ebenfalls lagegeregelt durch die Winkellagen α und β relativ zu dem Werkstück 5 ausgerichtet werden kann.

Darüber hinaus verfügt die Werkzeugmaschine 3 über eine dritte lagegeregelte Rundachse C, die parallel zur Z-Achse verläuft und bezüglich der der Werkstücktisch 10 relativ zu einem ruhenden Maschinengestell 11 drehbar gelagert ist. Dadurch kann das Werkstück 5 auch in einer Winkellage γ relativ zu dem Werkzeug 4 positioniert werden. Auch hier wurde der Übersichtlichkeit halber auf eine Darstellung des Antriebs verzichtet.

Abhängig von der durchzuführenden Bearbeitung ist bei der gezeigten Werkzeugmaschine 3 auch ein drehzahlgeregelter Betrieb bezüglich der Rundachsen A und/oder C möglich.

Die Werkzeugmaschine 3 gemäß dem Ausführungsbeispiel weist somit sechs Maschinenachsen (die 3 Linearachsen X, Y und Z sowie die 3 Rundachsen A, B und C) auf, d.h. es handelt sich um eine sogenannte 6-achsige Werkzeugmaschine (6-Achs-Maschine) 3.

Es sei an dieser Stelle angemerkt, dass eine Werkzeugmaschine selbstverständlich auch mehr oder weniger als sechs Maschinenachsen aufweisen kann.

Die Werkzeugmaschine 3 ist mit der CNC-Steuerung 2 verbunden, die anhand eines Steuerprogramms in Form eines Teileprogramms 12 Lagesollwerte x, y, z, α, β und γ zur Steuerung einer zwischen dem Werkzeug 4 und dem Werkstück 5 stattfindenden Relativbewegung ermittelt. Die CNC-Steuerung 2 ermittelt die Lagesollwerte anhand des Teileprogramms 12, in dem die vom Werkzeug 4 und/oder Werkstück 5 durchzuführende Bewegung durch Programmanweisungen in Form von sog. G-Code, der neben G-Anweisungen auch eine Vielzahl anderer Anweisungen (M-, S-, T-Anweisungen usw.) umfassen kann, definiert ist. Alternativ oder zusätzlich kann die Bewegung des Werkzeugs 4 und/oder das Werkstücks 5 auch mittels einer Handbedieneingabe über eine Bedieneinrichtung 13 in Verbindung mit einer Anzeigevorrichtung 14 der CNC-Steuerung 2 von einem Bediener vor Ort an der Werkzeugmaschine 3 vorgegeben werden. Die Bedieneinrichtung 13 weist hierzu insbesondere Eingabefelder, Tasten und Drehregler auf.

Das Teileprogramm 12 wird üblicherweise von einem externen CAM/CAD-System (nicht dargestellt) und einem eventuell dem CAM/CAD-System nachgeschalteten sogenannten Postprozessor (nicht dargestellt) außerhalb der CNC-Steuerung 2 erzeugt und von dort auf die CNC-Steuerung 2 übertragen.

Bei der Abarbeitung des Teileprogramms 12 erzeugt die CNC-Steuerung 2 in einem bestimmten Takt, dem Interpolationstakt, sowohl Lagesollwerte x, y und z für die Linearachsen als auch α, β und γ (Winkellagen) für die Rundachsen und weist diese den Antrieben der Achsen entsprechend an. Durch diese miteinander verknüpften, interpolierten Lagesollwerte wird das Werkzeug 4 mit vorgegebener Orientierung relativ zu dem Werkstück 5 entlang einer durch das Teileprogramm 12 vorgegebenen Bewegungsbahn bewegt. Von der CNC-Steuerung 2 umfasste Regler (Lageregler, Geschwindigkeitsregler, Beschleunigungsregler, Drehzahlregler etc., in Fig 1 nicht dargestellt) sorgen dafür, dass die jeweils vorgegebenen Werte innerhalb vorgegebener Toleranzen eingehalten werden.

Als Besonderheit umfasst die erfindungsgemäße CNC-Steuerung 2 gemäß dem Ausführungsbeispiel eine CAM-Software 15, sodass der CNC-Steuerung 2 direkt Werkstückdaten, insbesondere CAD-Daten 16 des zu fertigenden Werkstücks 5 zugeführt werden können. Die CAD-Daten 16 werden der CNC-Steuerung 2 insbesondere durch ein dafür geeignetes Speichermedium (z.B. USB-Stick) oder ein Netzwerk (LAN, WLAN etc.) zugeführt.

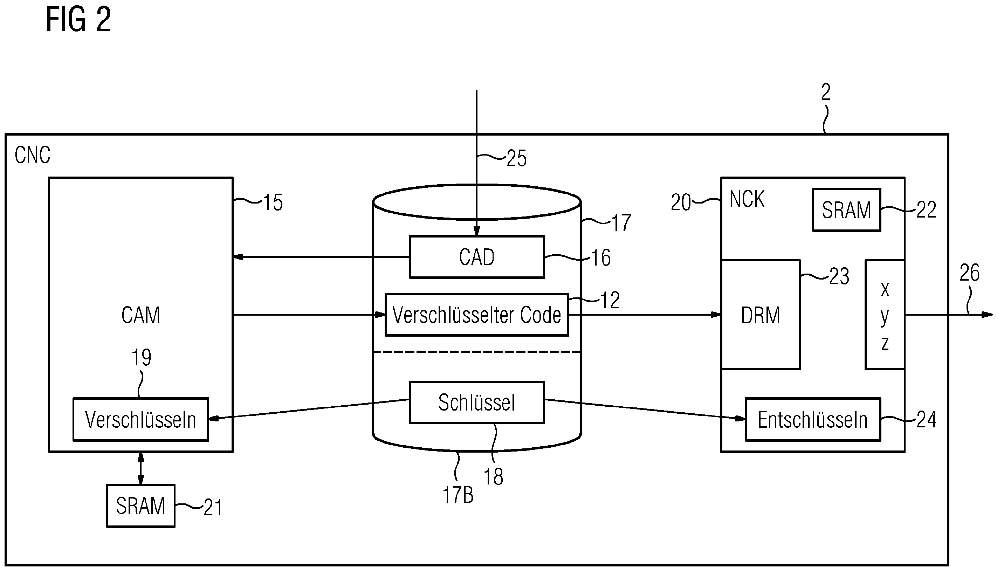

FIG 2 zeigt die im Zusammenhang mit der Erfindung wesentlichen Komponenten der CNC-Steuerung 2 in einer stark vereinfachten Block-Darstellung. Durch Eingabemittel (nicht dargestellt) werden der CNC-Steuerung 2 zunächst Werkstückdaten, insbesondere CAD-Daten 16 des zu bearbeitenden Werkstücks 5 zugänglich gemacht. Hierzu kann beispielsweise eine CAD-Datendatei auf die CNC-Steuerung 2 übermittelt (in der Figur angedeutet durch den Pfeil 25) und in einem nicht-flüchtigen (permanenten) Speicher 17 der CNC-Steuerung 2 hinterlegt werden. Die CAD-Datendatei umfasst daher zumindest die Geometrie des fertig bearbeiteten Werkstücks 5 betreffende CAD-Daten 16. Bei einer materialabtragenden Fertigung sind auch das Werkstückrohteil betreffende Daten von der CAD-Datendatei umfasst.

Neben der Übertragung einer CAD-Datendatei sind jedoch auch anderen Eingabemöglichkeiten zur Beschreibung des zu fertigenden Werkstücks 5 in die CNC-Steuerung 2 möglich, z.B. eine manuelle Eingabe.

Insbesondere im Zusammenhang mit der Übermittlung einer CAD-Datendatei ist es möglich, dass diese bzw. die darin vorhandenen CAD-Daten 16 verschlüsselt auf die CNC-Steuerung 2 übertragen werden und zur weiteren Verarbeitung in der CNC-Steuerung 2 durch letztere zunächst entschlüsselt werden.

Zum Erstellen des Teileprogramms 12 zur Fertigung des Werkstücks 5 ist auf der erfindungsgemäßen CNC-Steuerung 2 eine CAM-Software 15 vorhanden, die mittels geeigneter Hardware-Komponenten (Prozessor, Speicher etc; nicht dargestellt) ausgeführt wird und die aus den CAD-Daten 16 Programmanweisungen (G-Code) zur Bewegung des Werkzeugs 4 relativ zu dem Werkstücktisch 10 der Werkzeugmaschine 3 bzw. zu dem Werkstück 5 generiert.

Die CAD-Daten 16 des zu fertigenden Werkstücks 5 dienen als Eingangs-Daten in diese CAM-Software 15. Sie sind in einem nicht-flüchtigen (permanenten) Speicher 17 der CNC-Steuerung 2 hinterlegt. Weiterhin befindet sich in einem besonders geschützten und "versteckten" (für den Benutzer nicht sichtbaren) Speicherbereich 17B dieses Speichers 17 ein Schlüssel 18 zur Ver- und Entschlüsselung von Daten in Verbindung mit einer geeigneten Verschlüsselungs-Software, z.B. OpenSSL.

Vorteilhaft werden die generierten Programmanweisungen unmittelbar nach ihrer Erzeugung verschlüsselt und in verschlüsselter Form in dem nicht-flüchtigen Speicher 17 der CNC-Steuerung 2 hinterlegt. Die Verschlüsselung erfolgt mittels eines in der CNC-Steuerung 2 in einem für nicht autorisierte Benutzer unzugänglichen Speicherbereich 17B hinterlegten "Secret Key" (Key) 18 in Verbindung mit den Verschlüsselungs-Routinen (Encrypt) 19 der Verschlüsselungs-Software. Die Verschlüsselung kann satzweise oder blockweise erfolgen, wobei eine blockweise Verschlüsselung bedeutet, dass mehrere Programmanweisungen bzw. Sätze des Teileprogramms 12 gemeinsam in einem Verschlüsselungs-Vorgang verschlüsselt werden. Vorteilhaft sind die generierten Programmanweisungen vor der Verschlüsselung lediglich in einem der CAM-Software zugeordneten, von außen unzugänglichen, flüchtigen Speicher (SRAM) 21 gespeichert. Die verschlüsselten Programm-Blöcke werden schließlich in dem nichtflüchtigen Speicher 17 abgelegt. Dieser Vorgang wird so lange wiederholt, bis alle Programmanweisungen und somit das komplette Teileprogramm 12 (in Fig 2 auch als "Enc. Code" bezeichnet) in verschlüsselter Form in dem nicht-flüchtigen Speicher 17 der CNC-Steuerung 2 vorliegt.

Die Abarbeitung des Teileprogramms 12 erfolgt dann derart, dass zunächst die verschlüsselten Programmanweisungen des Teileprogramms 12 in einem NC-Kern (NCK) 20 der CNC-Steuerung 2 entschlüsselt werden. Der NC-Kern 20 ist der Teil der CNC-Steuerung 2, der letztendlich Lagesollwerte für die Achsen (in Figur 2 symbolisiert durch x, y, z) der Werkzeugmaschine 3 erzeugt und dazu entsprechende Lageregler aufweist. Die Lagesollwerte werden den Antrieben der Werkzeugmaschine angewiesen, symbolisiert durch den Pfeil 26.

Ähnlich zu der Verschlüsselung erfolgt auch die Entschlüsselung vorteilhaft in Blöcken von Programmanweisungen bzw. Sätzen des Teileprogramms 12. Hierzu liest eine von dem NCK 20 umfasste DRM- (Digital Rights Management) Entschlüsselungs-Bibliothek 23 das Teileprogramm 12 blockweise ein und entschlüsselt dieses mittels entsprechender Entschlüsselungs-Routinen (Decrypt) 24 der Verschlüsselungs-Software. Auch dem NCK 20 ist ein von außen unzugänglicher, flüchtiger Speicher (SRAM) 22 zugeordnet, in dem bereits durch die Werkzeugmaschine 3 abgearbeitete Sätze bzw. Blöcke des Teileprogramms 12 durch neue Sätze bzw. Blöcke überschrieben werden. Analog zu der Verschlüsselung liegt demnach auch hier das Teileprogramm 12 zu keinem Zeitpunkt vollständig entschlüsselt in einem Speicher der CNC-Steuerung 2 vor.

Ferner werden die entschlüsselten Programmanweisungen lediglich in einem flüchtigen Speicher (SRAM) 22 des NCK 20 gespeichert
Die DRM-Bibliothek 23 wird vorzugsweise zum Start des NCKs geladen und entschlüsselt die zur Abarbeitung durch den NCK bestimmten, verschlüsselten Teileprogramme blockweise. Durch die Verwendung der DRM-Bibliothek 23 wird das verschlüsselte Teileprogramm 12 weder insgesamt noch in Teilen davon im Filesystem der CNC-Steuerung 2, dargestellt durch den nicht-flüchtigen Speicher 17, ungeschützt sichtbar. Der Namen DRM (Digital Rights Management) deutet bereits auf weitere Möglichkeiten der DRM-Bibliothek 23 hin. Vorteilhaft können neben bestimmten Einstellungen der Ver- und Entschlüsselung auch Dateirechte wie Nutzungsdauer, Ausführungsanzahl oder zusätzliche Optionen (Verknüpfung mit einer Lizenz, Verknüpfung mit einer bestimmten Maschine, Festlegung auf ein bestimmtes Ver- bzw. Entschlüsselungsverfahren etc.) eingestellt werden.

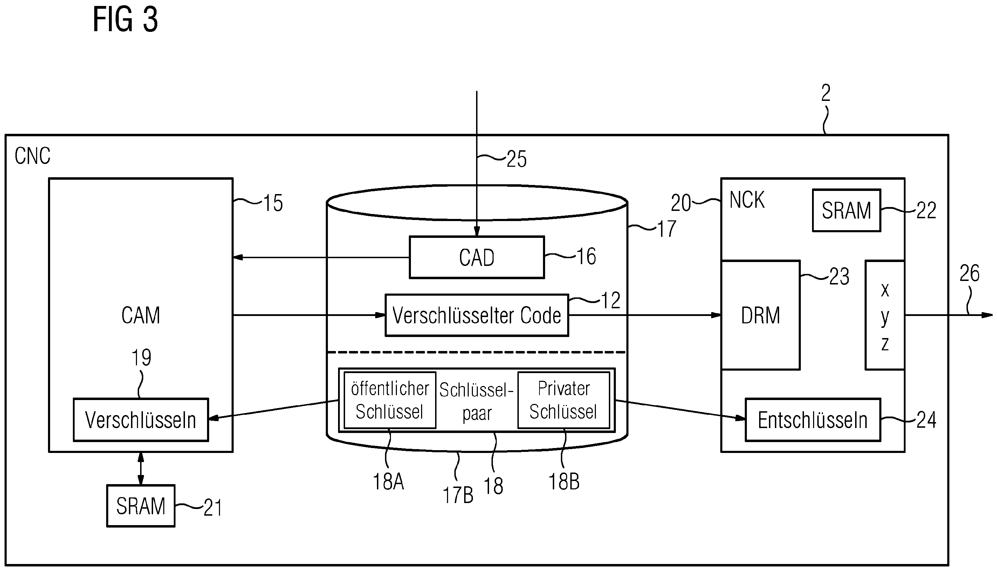

Das Ausführungsbeispiel gemäß FIG 3 entspricht weitgehend dem gemäß FIG 2 mit dem Unterschied, dass bei FIG 3 auf eine sog. asymmetrische Verschlüsselung zurückgegriffen wird. Dies bedeutet, zur Ver- und Entschlüsselung werden unterschiedliche Schlüssel, insbesondere ein Schlüssel-Paar verwendet.

So zeigt FIG 3 ein Schlüsselpaar (Key-Pair) 18C in Form eines "Public Key" 18A, der nicht geheim ist und zur Verschlüsselung verwendet wird, und einem geheimen "Private Key" 18B zur Entschlüsselung. Auch diese beiden Schlüssel 18A und 18B sind vorzugsweise in einem für den Bediener der CNC-Steuerung 2 von außen unzugänglichen Speicherbereich 17B des nicht-flüchtigen Speichers 17 hinterlegt.

Der bzw. die Schlüssel 18 bzw. 18A und 18B können vom Hersteller der CNC-Steuerung bereitgestellt werden, z.B. in einer dafür vorgesehenen Bibliothek. Es kann auf der CNC-Steuerung 2 jedoch auch lediglich ein Ablageort für den bzw. die Schlüssel hinterlegt sein.

Weiterhin kann der Schlüssel für die Ver- und/oder Entschlüsselung auch von einem OEM (Original Equipment Manufacturer) festgelegt werden, der auf der CNC-Steuerung 2 des Steuerungs-Herstellers aufsetzt und diese um eigene Funktionen bzw. Applikationen, in der Regel für Kunden mit speziellen Anforderungen, anreichert. Auch hierbei kann dem OEM seitens des Steuerungs-Herstellers eine entsprechende Bibliothek zur Verfügung gestellt werden.

Ferner kann auch ein Bediener der CNC-Steuerung 2, der zur Erstellung eines Teileprogramms die entsprechende CAM-Software 15 nutzt, den Schlüssel zur Ver- und/oder Entschlüsselung bestimmen.

Wird ein Schlüsselpaar (z.B. Key-Pair 18C) vorgesehen, so können die Schlüssel auch von unterschiedlichen Unternehmen bereitgestellt werden, z.B. der Public Key 18A von einem Hersteller der CNC-Steuerung 2 und der Schlüssel 18B von einem OEM.

Vorteilhaft werden die Schlüssel 18 bzw. 18A und 18B in einem TPM (Trusted Platform Module) abgelegt und nur bestimmten Applikationen bzw. Bibliotheken zur Verfügung gestellt.

Neben dem bzw. den Schlüsseln 18 bzw. 18A und 18B beinhaltet die Bibliothek vorzugsweise auch Informationen darüber, wie das verschlüsselte Teileprogramm 12 entschlüsselt werden muss. Hierbei sind verschiedene Entschlüsselungsverfahren möglich, die in der Regel auch von dem gewählten Verschlüsselungsverfahren abhängen.

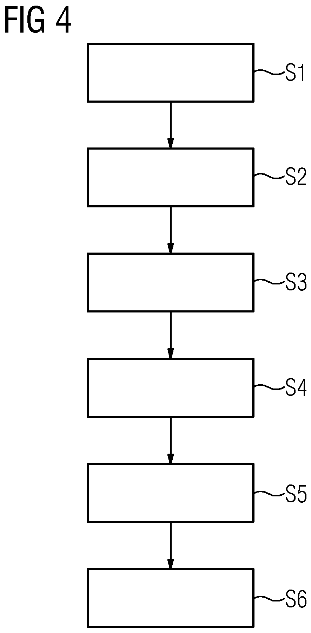

FIG 4 veranschaulicht die wesentlichen Verfahrensschritte bei der Durchführung eines erfindungsgemäßen Verfahrens in Form eines Ablaufdiagramms.

In einem ersten Verfahrensschritt S1 werden Werkstückdaten (CAD-Daten) auf einer numerischen Steuereinrichtung einer Werkzeugmaschine bereitgestellt.

In einem zweiten Verfahrensschritt S2 wird eine CAM-Software auf der numerischen Steuereinrichtung bereitgestellt.

In einem Verfahrensschritt S3 werden mittels der CAM-Software in Abhängigkeit der Werkstückdaten Programmanweisungen zur Fertigung des Werkstücks mittels der Werkzeugmaschine erzeugt.

In einem Verfahrensschritt S4 werden die erzeugten Programmanweisungen verschlüsselt und in einem nicht-flüchtigen Speicher der numerischen Steuereinrichtung gespeichert.

In einem Verfahrensschritt S5 werden die verschlüsselten Programmanweisungen aus dem nicht-flüchtigen Speicher ausgelesen und entschlüsselt.

In einem Verfahrensschritt S6 werden die entschlüsselten Programmanweisungen durch die numerische Steuereinrichtung abgearbeitet zur Steuerung der Werkzeugmaschine zur Fertigung des Werkstücks.

## Patentansprüche

1. Verfahren zum Betrieb einer numerischen Steuereinrichtung zum Steuern einer Fertigungsmaschine zur Fertigung eines Werkstücks (5) mit folgenden Schritten:
- Bereitstellen von Werkstückdaten auf der numerischen Steuereinrichtung,
- Bereitstellen einer CAM-Software (15) auf der numerischen Steuereinrichtung,
- Erzeugen von Programmanweisungen zur Fertigung des Werkstücks (5) mittels der Fertigungsmaschine, wobei die Programmanweisungen mittels der CAM-Software (15) in Abhängigkeit der Werkstückdaten auf der numerischen Steuereinrichtung erzeugt werden,
- Verschlüsseln der Programmanweisungen und speichern der verschlüsselten Programmanweisungen in einem nichtflüchtigen Speicher der numerischen Steuereinrichtung,
- Auslesen der verschlüsselten Programmanweisungen aus dem nichtflüchtigen Speicher, entschlüsseln der verschlüsselten Programmanweisungen und abarbeiten der entschlüsselten Programmanweisungen durch die numerische Steuereinrichtung zur Steuerung der Fertigungsmaschine zur Fertigung des Werkstücks.

2. Verfahren nach Anspruch 1, wobei die Programmanweisungen einzelne Sätze oder Blöcke aus mehreren Sätzen eines Teileprogramms zur Fertigung des Werkstücks (5) bilden.

3. Verfahren nach Anspruch 1 oder 2, wobei die verschlüsselten Programmanweisungen in einem NC-Kern (20) der numerischen Steuereinrichtung entschlüsselt werden.

4. Verfahren nach einem der Ansprüche 1 bis 3, wobei die entschlüsselten Programmanweisungen lediglich in einem flüchtigen Speicher der numerischen Steuereinrichtung, insbesondere des NC-Kerns (20), verfügbar gemacht werden.

5. Verfahren nach einem der vorherigen Ansprüche, wobei die Entschlüsselung der Programmanweisungen in Abhängigkeit von mit den Programmanweisungen verknüpften Metadaten erfolgt.

6. Verfahren nach einem der vorherigen Ansprüche, wobei die Entschlüsselung der Programmanweisungen auf eine bestimmte numerischen Steuereinrichtung und/oder eine bestimmte Fertigungsmaschine und/oder für eine bestimmte Lizenz beschränkt ist.

7. Verfahren nach einem der vorherigen Ansprüche, wobei ein Schlüssel zum Ver- und Entschlüsseln der Programmanweisungen verwendet wird.

8. Verfahren nach einem der vorherigen Ansprüche, wobei ein erster Schlüssel zum Verschlüsseln und ein zweiter Schlüssel zum Entschlüsseln der Programmanweisungen verwendet wird.

9. Verfahren nach einem der vorherigen Ansprüche, wobei die Ver- und Entschlüsselung unter Verwendung von OpenSSL Software erfolgt.

10. Verfahren nach einem der Ansprüche 3 bis 9, wobei der NC-Kern (20) mittels einer DRM Bibliothek (23), die Zugriffsrechte verwaltet, auf die verschlüsselten Programmanweisungen zugreift, diese entschlüsselt und abarbeitet.

11. Verfahren nach Anspruch 10, wobei der NC-Kern (20) erst nach einer erfolgreichen Authentifizierung mittels der DRM Bibliothek (23) auf die verschlüsselten Programmanweisungen zugreift, diese entschlüsselt und abarbeitet.

12. Numerische Steuereinrichtung zur Durchführung eines Verfahrens nach einem der Ansprüche 1 bis 11.

13. Numerische Steuereinrichtung nach Anspruch 12, ausgebildet als CNC-Steuerung (2).

14. Fertigungsmaschinensystem, umfassend eine numerische Steuereinrichtung nach Anspruch 12 oder 13 und eine davon gesteuerte Fertigungsmaschine.

15. Werkzeugmaschinensystem nach Anspruch 14, umfassend eine CNC-Steuerung (2) und eine Werkzeugmaschine (3).

## Claims

1. Method for operating a numerical control facility for controlling a manufacturing machine for manufacturing a workpiece (5) comprising the following steps:
- provision of workpiece data on the numerical control facility,
- provision of CAM software (15) on the numerical control facility,
- generation of program instructions for manufacturing the workpiece (5) by means of the manufacturing machine, wherein the program instructions are generated on the numerical control facility by means of the CAM software (15) in accordance with the workpiece data,
- encryption of the program instructions and saving of the encrypted program instructions in a non-volatile memory of the numerical control facility,
- readout of the encrypted program instructions from the non-volatile memory, decryption of the encrypted program instructions and processing of the decrypted program instructions by the numerical control facility for controlling the manufacturing machine for manufacturing the workpiece.

2. Method according to claim 1, wherein the program instructions form individual sets or blocks of a plurality of sets of a parts program for manufacturing the workpiece (5).

3. Method according to claim 1 or 2, wherein the encrypted program instructions are decrypted in a NC kernel (20) of the numerical control facility.

4. Method according to one of claims 1 to 3, wherein the decrypted program instructions are only made available in a volatile memory of the numerical control facility, in particular the NC kernel (20).

5. Method according to one of the preceding claims, wherein the program instructions are decrypted in accordance with metadata associated with the program instructions.

6. Method according to one of the preceding claims, wherein the decryption of the program instructions is restricted to a particular numerical control facility and/or a particular manufacturing machine and/or a particular license.

7. Method according to one of the preceding claims, wherein a key is used for encryption and decryption of the program instructions.

8. Method according to one of the preceding claims, wherein a first key is used for encryption and a second key for decryption of the program instructions.

9. Method according to one of the preceding claims, wherein encryption and decryption takes place using OpenSSL software.

10. Method according to one of claims 3 to 9, wherein the NC kernel (20) manages the access rights, accesses the encrypted program instructions, and decrypts and processes these by means of a DRM library (23).

11. Method according to claim 10, wherein the NC kernel (20) accesses the encrypted program instructions, decrypts and processes these only after successful authentication by means of the DRM library (23).

12. Numerical control device for performing a method according to one of claims 1 to 11.

13. Numerical control device according to claim 12, designed as a CNC control system (2).

14. Manufacturing machine system, comprising a numerical control facility according to claim 12 or 13 and a manufacturing machine controlled thereby.

15. Machine tool system according to claim 14, comprising a CNC control system (2) and a machine tool (3).

## Revendications

1. Procédé pour faire fonctionner un dispositif à commande numérique pour la commande d'une machine de fabrication pour la fabrication d'une pièce (5) comprenant les stades suivants :
- mise en place de données de pièce sur le dispositif à commande numérique,
- mise en place d'un logiciel CAM (15) sur le dispositif à commande numérique,
- production d'instructions de programme pour la fabrication de la pièce (5) au moyen de la machine de fabrication, dans lequel on produit les instructions de programme au moyen du logiciel CAM (15) en fonction des données de pièce sur le dispositif à commande numérique,
- chiffrement des instructions de programme et mise des instructions de programme chiffrées dans une mémoire non volatile du dispositif à commande numérique,
- lecture des instructions de programme chiffrées dans la mémoire non volatile, déchiffrement des instructions de programme chiffrées et élaboration des instructions de programme déchiffrées par le dispositif à commande numérique pour la commande de la machine de fabrication pour la fabrication de la pièce.

2. Procédé suivant la revendication 1, dans lequel les instructions de programme forment des ensembles ou des blocs individuels composés de plusieurs ensembles d'un programme de pièces pour la fabrication de la pièce (5).

3. Procédé suivant la revendication 1 ou 2, dans lequel on déchiffre les instructions de programme chiffrées dans un noyau NC (20) du dispositif à commande numérique.

4. Procédé suivant l'une des revendications 1 à 3, dans lequel on rend disponible les instructions de programme déchiffrées seulement dans une mémoire volatile du dispositif à commande numérique, en particulier du noyau NC (20).

5. Procédé suivant l'une des revendications précédentes, dans lequel le déchiffrement des instructions de programme s'effectue en fonction de métadonnées combinées aux instructions de programme.

6. Procédé suivant l'une des revendications précédentes, dans lequel le déchiffrement des instructions de programme est limité à un dispositif à commande numérique déterminé et/ou à une machine de fabrication déterminée et/ou pour une licence déterminée.

7. Procédé suivant l'une des revendications précédentes, dans lequel on utilise une clé pour chiffrer et déchiffrer des instructions de programme.

8. Procédé suivant l'une des revendications précédentes, dans lequel on utilise une première clé pour le chiffrement et une deuxième clé pour le déchiffrement des instructions de programme.

9. Procédé suivant l'une des revendications précédentes, dans lequel le chiffrement et le déchiffrement s'effectuent en utilisant des logiciels OpenSSL.

10. Procédé suivant l'une des revendications 3 à 9, dans lequel le noyau NC (20) gère, au moyen d'une bibliothèque DRM (23), les droits d'accès, accède aux instructions de programme chiffrées, les déchiffre et les élabore.

11. Procédé suivant la revendication 10, dans lequel le noyau NC (20) accède, seulement après une authentification couronnée de succès au moyen de la bibliothèque DRM (23), aux instructions de programme chiffrées, les déchiffre et les élabore.

12. Dispositif à commande numérique pour exécuter un procédé suivant l'une des revendications 1 à 11.

13. Dispositif à commande numérique suivant la revendication 12, constitué en commande CNC (2).

14. Système de machine de fabrication, comprenant un dispositif à commande numérique suivant la revendication 12 ou 13 et une machine de fabrication, qui en est commandée.

15. Système de machine-outil suivant la revendication 14, comprenant une commande CNC (2) et une machine-outil (3).
